Europäisches Patentamt

European Patent Office

Office européen des brevets

(19)

(11) Numéro de publication: **0 112 247**
**A2**

(12)

# DEMANDE DE BREVET EUROPEEN

(21) Numéro de dépôt: **83402399.6**

(22) Date de dépôt: **13.12.83**

(51) Int. Cl.³: **A 62 B 23/02**
**A 41 D 13/00, B 01 D 39/02**

(30) Priorité: **16.12.82 FR 8221112**

(43) Date de publication de la demande:
**27.06.84 Bulletin 84/26**

(84) Etats contractants désignés:
**BE DE FR GB IT NL SE**

(71) Demandeur: **L. GIFFARD S.A. Société anonyme dite :**
**Z.I. de la Gare B.P. 9**
**F-22940 Plaintel(FR)**

(72) Inventeur: **Giffard, Louis**
**Résidence du Levant 23 rue de Bourgogne**
**F-22120 Langueux(FR)**

(74) Mandataire: **Dupuy, René Gaston**
**Cabinet René G. Dupuy & Jean M.L. Loyer 14, Rue La**
**Fayette**
**F-75009 Paris(FR)**

(54) **Procédé et installation de production d'éléments filtrants notamment de masques respiratoires.**

(57) On déchiquette une nappe Vi de non-tissé pour la réduire en flocons ou charpie, on projette sous pression ces flocons sur une première coquille de l'élément ou masque afin d'obtenir un matelas sans cohésion, on ferme l'élément ou masque au moyen de la seconde coquille.

FIG.2

EP 0 112 247 A2

Croydon Printing Company Ltd.

**0112247**

# PROCEDE ET INSTALLATION DE PRODUCTION D'ELEMENTS FILTRANTS NOTAMMENT DE MASQUES RESPIRATOIRES.

L'invention se rapporte à un nouveau procédé de fabrication de masques, respiratoires en particulier.

On sait que ces masques sont obtenus par formage après découpage d'un matelas de fibres non-tissées légèrement feutrées.

Il est bien connu que la difficulté réside dans l'homogénéité du matelas, afin que tous les masques en provenant, aient les mêmes qualités filtrantes.

C'est qu'en effet ces matelas sont formés par superposition de lits, faits de voiles de fibres que l'on entremêle dans un appareil mélangeur appelé Rando-Weber.

On constate néanmoins que les fibres ont tendance à glisser les unes sur les autres, provoquant ainsi des "clairs" donc des zones de filtration médiocre ou mauvaise, zones qui ont tendance à s'accentuer lors du formage.

Pour remédier à ce défaut, on lie parfois les fibres au moyen d'un liant thermodurcissable, ce qui a l'inconvénient d'augmenter non seulement le prix de revient, mais surtout la perte de charge.

Enfin, le découpage traditionnel du matelas conduit à des pertes de matière importantes (jusqu'à 200 à 300 %).

Le procédé selon l'invention évite l'un et l'autre de ces inconvénients et permet de réaliser des masques respiratoires ayant un pouvoir filtrant constant d'au moins 88 % et même plus dans les tests réalisés selon la norme AFNOR (N.76.101 de mai 1975 et N.76.201. d'octobre 1975).

D'autres particularités et avantages apparaîtront à la lecture de la description et des revendications qui suivent, faites en regard des dessins sur lesquels :

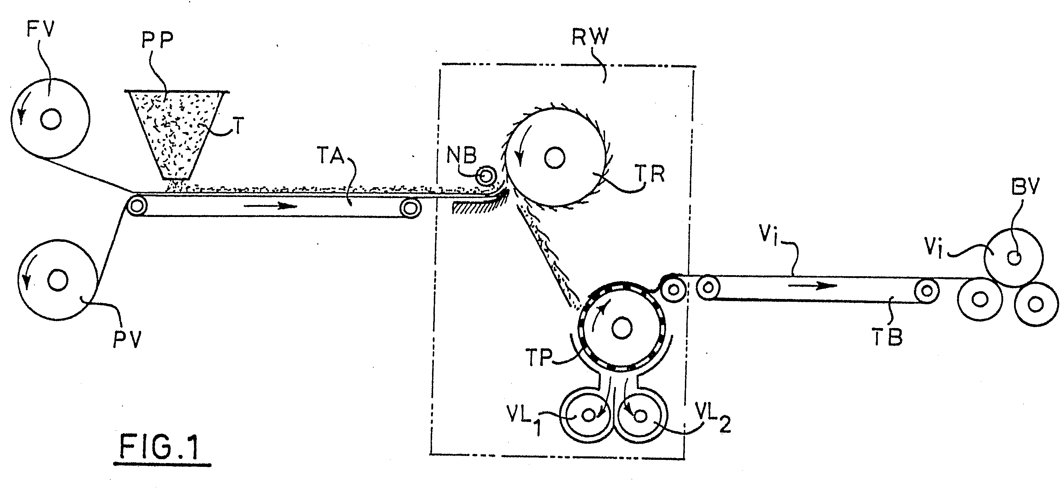

- *la figure 1* est un schéma se rapportant à l'installation permettant d'obtenir la nappe composite utilisée selon l'invention ;

- *la figure 2* est un schéma montrant la préparation des flocons et la formation du masque ;

- *les figures 3 et 4* se rapportent à cette formation.

D'une manière classique, on prépare un voile cardé et aiguilleté de fibres PV (par exemple vinyliques comme du "Rhovyl") de 3 dtx ou de polyester de 1 dtx ou de n'importe quelle fibre polyamide, d'une épaisseur de 100 g/m2 et que l'on met en bobine.

On place en vrac dans une trémie T des fibres sèches (PP) de polypropylène de moins de 5 microns.

Sur le transporteur à bande (TA) continue, on déroule la nappe (PV) et on la fait passer sous la trémie qui débite 800 g/m2 de ce polypropylène (PP).

Cet ensemble est introduit dans un mélangeur à peigne, par exemple un Rando-Weber (RW) qui, comme on le sait, comporte un tambour à peignes (TR) qui a pour mission de mélanger les fibres et un tambour perforé (TP) dont l'intérieur est maintenu en dépression et sur le pourtour duquel vient se constituer le voile après mélange des constituants.

On peut également placer sur la nappe (PV), avant son passage sous la trémie, une nappe de fibres synthétiques ou minérales (par exemple, verre, polyamide) linéaires (FV) de 150 g/m2 constituée par des fibres de moins de 2 microns et de préférence de 0,3 micron.

Ces fibres linéaires pourraient également être ajoutées au polypropylène dans la trémie.

La Demanderesse a observé qu'il était nécessaire de donner un réglage particulier au mélangeur à peigne, correspondant à un maximum d'efficacité du mélange.

Ce réglage correspond aux données suivantes :
- vitesse d'entrée de la nappe complexe, 0,40 m/minute,
- vitesse du tambour à peignes (TR), 2800 t/minute,
- 1/2 régime des deux ventilateurs (VL1-VL2) assurant l'aspiration dans le tambour perforé (TP),
- vitesse de sortie, 3,6 m/minute (transporteur TB).

On obtient ainsi un voile complexe Vi de 250 g/m2.

Avec les appareillages classiques, ce voile Vi a une largeur de 1,03 m.

Pour les besoins de la seconde opération, en vue d'obtenir des masques, on découpe ce voile Vi en bandes d'environ 18 cm au moyen de couteaux (non représentés) situés entre le tapis de sortie TB et les bobines d'enroulement BV.

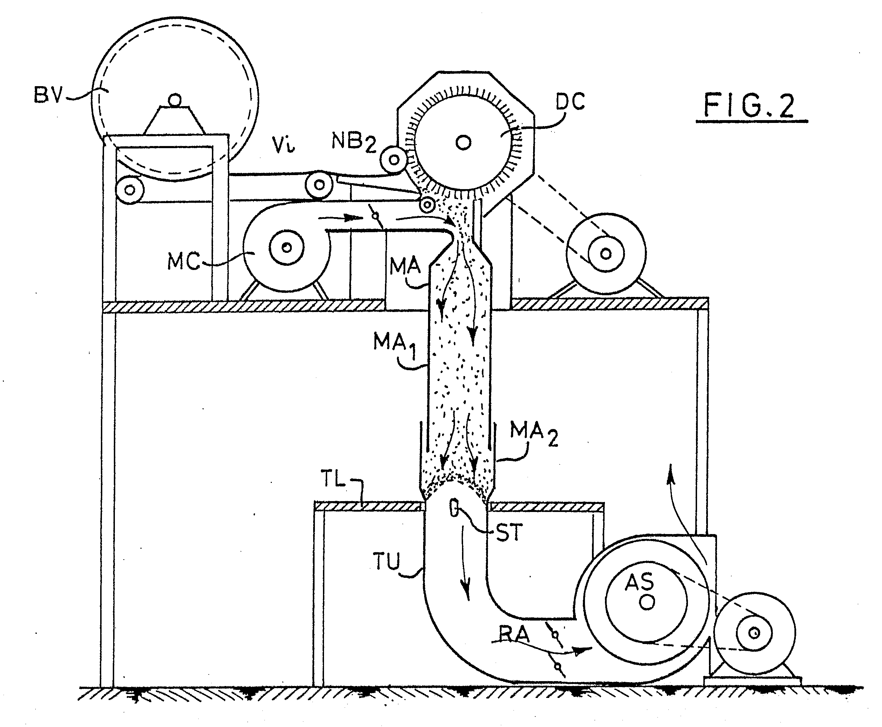

La figure 2 montre l'appareillage d'une installation de mise en pratique du procédé selon l'invention, et nécessaire à la préparation des flocons et à la formation d'élément filtrant, ici un masque. Cet appareillage comprend un dispositif de déroulement d'une bobine BV sur laquelle a été enroulée une bande du voile Vi et une déchiqueteuse DC, dans laquelle la bande portée par le tapis TE entre.

Le peigne de la déchiqueteuse DC tourne très vite (3000 t/minute) et réduit le voile Vi, en charpie, enlevant toute cohésion entre les fibres le constituant.

Pour la facilité de compréhension du texte qui suit, cette charpie sera dénommée "flocon", à ne pas confondre avec ce terme utilisé dans le FR - A - 2 377 833 dans lequel l'élément filtrant est composé d'agrégats fibreux dénommés improprement flocons (tampons serait plus exact) à tassement contrôlé bien défini.

C'est à partir de cette matière première en nuage que le masque va être moulé, "flocon" par "flocon".

En effet, à la sortie de la déchiqueteuse les "flocons" sont entraînés dans une manche à air MA par une machine de compression d'air MC (compresseur, ventilateur, surpresseur, soufflerie). La longueur de la tubulure ou manche à air MA est calculée pour que le flux (air + "flocons") passe de l'état turbulent à la sortie de la déchiqueteuse, à l'état laminaire à l'extrémité inférieure de cette tubulure.

Au-dessous de celle-ci se trouve une table TL percée d'un orifice OT auquel aboutit une tubulure inférieure TU dont l'autre extrémité est solidaire de l'aspiration d'une machine tournante (AS) destinée à créer une dépression dans cette tubulure.

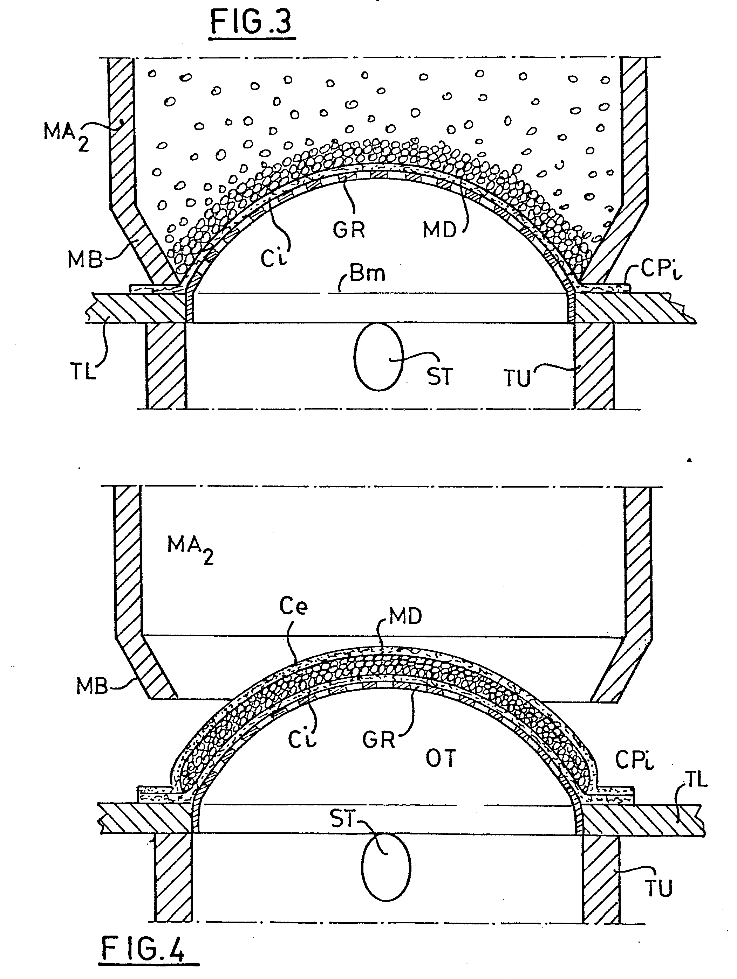

Cet orifice OT est coiffé par une grille GR (voir figures 3 et 4) conformée selon le profil, ici du masque à

0112247

obtenir et placée sous la tubulure MA dont la partie inférieure MA2 coulisse télescopiquement par rapport à la partie supérieure MA1 de cette manche MA.

Cette disposition permet d'obtenir, soit des éléments filtrants ou masques à trois épaisseurs, c'est-à-dire un matelas filtrant interposé entre deux supports extérieurs, soit des éléments filtrants ou masques uniquement constitués du matelas filtrant.

Pour réaliser un élément filtrant à trois épaisseurs on pose sur la grille GR par exemple la coquille intérieure Ci en textile tissé ou non-tissé, qui repose par sa périphérie CPi sur la table TL.

On applique sur cette périphérie l'extrémité MB de MA2 de manière à ce que cette périphérie reste libre de "flocons". Ceux-ci pulsés par l'air venant de MC se déposent d'une manière uniforme sur la partie convexe de la coquille Ci. Au fur et à mesure que ce dépôt s'épaissit, la perte de charge dans la tubulure inférieure TU, augmente.

Un dispositif de mesure (par exemple une sonde ST) évalue la pression résultante et par conséquent cette perte de charge en TU.

On place à l'intérieur de cette tubulure TU un dispositif de réglage de l'aspiration RA par exemple des volets commandés par une ou plusieurs électro-vannes (non représentées).

Il est aisé de comprendre que la sonde ST peut déclencher un dispositif servo-moteur (relais par exemple) au moment où elle enregistre une perte de charge prédéterminée, lequel dispositif servo-moteur peut actionner à son tour les organes de manoeuvre (par exemple électro-vannes) des volets du dispositif de réglage RA, voire ouvrir le circuit d'alimentation des moteurs des machines AS et MC.

On voit que de cette manière on peut régler l'épaisseur du matelas MD formé par le dépôt des "flocons" sur la coquille Ci, et que par voie de conséquence, tous les masques formés produisent la même perte de charge, et sont contrôlés en cours de fabrication.

Le dispositif servo-moteur peut également actionner un vérin remontant automatiquement la partie MA2 de la tubulure MA pour dégager l'accès au masque en cours de fabrication.

On peut alors poser la coquille extérieure Ce et assembler les deux coquilles par des moyens traditionnels, en observant néanmoins que la périphérie CPi ayant été protégée de la chute des "flocons" en est pratiquement exempte de ceux-ci, ce qui facilite grandement la soudure, si ce mode d'assemblage est choisi.

On constate que selon ce procédé, il n'y a plus aucune perte de matière, puisqu'il n'y a plus de découpage.

On peut évidemment envisager d'utiliser une table tournante dite "révolver" comportant une pluralité de postes, tels par exemple, un poste d'approvisionnement en coquille inférieure, un poste de formage du matelas isolant, un poste de pose de la coquille extérieure et un poste de soudure.

Une telle table tournante à plusieurs postes peut être aussi utilisée dans le cas où l'on peut obtenir un élément filtrant ou masque à une seule couche, laquelle occupe un des ces postes, les autres postes pouvant être des postes de pulvérisation de liant, de polymérisation etc...

Les masques réalisés selon le procédé objet de l'invention, ont un pouvoir filtrant bien supérieur aux masques traditionnels dans lesquels le matelas filtrant est une nappe feutrée.

La raison tient essentiellement au fait que la couche filtrante n'est pas compressée ou compactée comme c'est le cas avec de telle nappe feutrée.

Par ailleurs, le processus de formation permet d'incorporer aux "flocons" des charges minérales, comme du charbon actif sans connaître les inconvénients d'une manipulation salissante à l'air libre, sous condition de couper le flux dans la manche MA avant le relèvement de MA2.

L'invention n'est pas limitée à la fabrication de masque respiratoire, il est aisé de comprendre que l'on
peut utiliser une grille et des coquilles ayant d'autres
formes que celle d'un groin, et qu'il est donc possible
de faire des éléments filtrants industriels.

REVENDICATIONS

1.- Procédé d'obtention d'un élément filtrant, *caractérisé* en ce que l'on dépose directement ou indirectement sur une grille (GR) placée sur une table (TL) au-dessus de l'orifice d'une manche (TU) à air dans laquelle on produit une dépression contrôlée, à l'aide d'une goulotte (MA) dont l'extrémité inférieure (MB) appliquée directement ou indirectement sur cette table (TL), un nuage de fibres ou filaments juxtaposés en flocons, sans cohésion entre eux et obtenus par déchiquetage d'une nappe non-tissée dé fibres de textile naturel, artificiel ou synthétique et que l'on soumet l'élément filtrant ainsi réalisé à une fixation superficielle de ses fibres.

2. - Procédé d'obtention d'un élément filtrant, comme un masque respiratoire, comportant deux coquilles extérieures préformées (Ci et Ce) en matière textile tissée ou non-tissée et un lit de matériau filtrant (MD) enfermé entre ces deux coquilles, *caractérisé* en ce que l'on pose sur la table (TL) (ou la grille (GR)) au-dessus de l'orifice de la manche (TU), la coquille inférieure (Ci), que l'on dépose selon la revendication 1, le matériau filtrant sous-forme d'un nuage de fibres ou filaments sans cohésion entre eux, que l'on pose la coquille supérieure (Ce) et que l'on assemble entre elles les coquilles, par exemple par soudure.

3.- Procédé selon la revendication 1, *caractérisé* en ce que les fibres obtenues par déchiquetage sont à l'intérieur de la goulotte (MA) portés par un flux d'air pulsé sous pression constante.

4.- Procédé selon l'une des revendications précédentes, *caractérisé* en ce que la nappe de fibres non-tissées déchiquetée est constituée par un mélange de fibres ondulées ou frisées et de fibres rectilignes.

5. - Procédé selon l'une des revendications précédentes dans laquelle cette nappe est déchiquetée, *caractérisé* en ce qu'elle est faite d'un mélange de fibres ondulées ou frisées (PP), en polypropylène de diamètre d'au moins 5

- 8 -

0112247

microns et de fibres dites "linéaires" (FV) en polyamides ou minérales d'un diamètre voisin de 0,3 microns.

6.- Procédé selon l'une-des revendications précédentes, *caractérisé* en ce que sur un voile de base de fibres cardées et aiguilletées vinyliques (PV) de 3 dtex ayant une épaisseur correspondant à 100 g/m2, on dépose 800 g/m2 de polypropylène (PP) et 150 g/m2 de fibres "linéaires" (FL); que la nappe résultante est introduite dans un mélangeur à peigne (Rando-Weber par exemple) (RW), cet appareil étant réglé pour que la nappe composite formée sorte sous une épaisseur correspondant à 120 g/m2 répartis sur 1,03 m de large, que l'on découpe cette nappe composite en bandes d'environ 18 cm de large, que chacune de ces bandes est introduite dans une déchiqueteuse (DC) à peigne (par exemple Lickerin) tournant très vite, les fibres ou filaments obtenus étant éjectés par la force centrifuge, d'une part, et par pression de l'air produit par un dispositif de compression (MC) comme un ventilateur.

7. - Installation pour la mise en oeuvre du procédé selon l'une des revendications précédentes, en vue de l'obtention d'un élément filtrant ou masque respiratoire selon la revendication 2, *caractérisée* en ce que le poste de formage du lit filtrant (MD) comporte une tubulure verticale (TU) reliée à l'aspiration d'une machine tournante (AS) comme un ventilateur, une grille (GR) épousant la forme de l'une des coquilles (Ci ou Ce) et placée à l'orifice supérieur (OT) de ladite tubulure (TU), une manche à air constituée par une seconde tubulure verticale (MA) servant de goulotte pour l'amenée des fibres déchiquetées, la partie inférieure (MB) de cette seconde tubulure appliquant contre la périphérie de la coquille intérieure (Ci), une fois qu'elle est posée sur la grille (GR), de manière à canaliser les fibres pour qu'elles se déposent sur cette coquille à l'exclusion de cette périphérie.

8.- Installation selon la revendication 7, *caractérisée* en ce que la seconde tubulure (MA) est en au moins deux tronçons, le tronçon inférieur (MA2) pouvant être relevé pour dégager la coquille inférieure (Ci) chargée de son lit de fibres (MD), cette seconde tubulure verti- càie (MA) étant reliée à une machine de compression d'air (MC) comme un ventilateur, cette installation comprenant en outre un poste de préparation de fibres comprenant une déchiqueteuse (DC) déversant des fibres dans la partie haute de la seconde tubulure (MA), sous pression d'un flux d'air produit par une machine de compression (MC) (ventilateur par exemple).

9. - Installation selon l'une des revendications 7 ou 8, *caractérisée* en ce qu'immédiatement au-dessous de la grille (GR), est placée à l'intérieur de la première tubulure (TU) l'entrée d'un dispositif mesureur de pression (ST), (sonde par exemple), ce dispositif mesureur de pression (ST) pouvant agir sur des moyens (RA) réglant, soit le débit du flux d'air sous pression, soit le débit du flux d'air en dépression, soit les deux débits par l'intermédiaire d'un rèlais pré-tàré.

FIG.1

0112247

0112247

FIG.2

FIG.3

FIG.4